# EUROPEAN PATENT SPECIFICATION

(11) **EP 2 887 759 B1**
(45) Date of publication and mention of the grant of the patent: **28.11.2018**
(21) Application number: 13830628.7
(22) Date of filing: 12.08.2013
(51) Int. Cl.: H04W 88/08

(54) **MOBILE HOTSPOT DEVICE AND METHOD FOR ACCESSING NETWORK**
MOBILE HOTSPOT-VORRICHTUNG UND VERFAHREN ZUM ZUGREIFEN AUF EIN NETZWERK
DISPOSITIF MOBILE POUR ZONE D'ACCÈS SANS FIL ET PROCÉDÉ D'ACCÈS À UN RÉSEAU

(30) Priority: 20.08.2012 CN 201210296555
(43) Date of publication of application: 24.06.2015
(73) Proprietor: ZTE Corporation, Shenzhen, Guangdong 518057 (CN)
(72) Inventor: XUE, Rong, Shenzhen, Guangdong 518057 (CN); ZHANG, Jianhua, Shenzhen, Guangdong 518057 (CN)
(74) Representative: Stöckeler, Ferdinand
(86) International application number: PCT/CN2013/081324
(87) International publication number: WO 2014/029288

(56) References cited:
- EP-A1- 2 387 286
- WO-A1-03/001742
- CN-A- 102 523 637
- CN-A- 102 833 878
- CN-U- 202 111 875
- CN-Y- 201 114 586
- CN-Y- 201 355 871
- US-A1- 2011 164 598

## Description

### Technical Field

The present invention relates to the field of communications, and in particular to a mobile hotspot device and a method for accessing a network.

### Background

With the continuous development of society and the continuous progress of science, people have not been limited to a place indoor or a fixed place to work, but often need to access a network anytime and anywhere. In addition, for many young people without housing, a fixed way of accessing a network will cause inconvenience.

Thus, these original ways, like accessing a network through an Ethernet interface, or accessing a network through a wireless local area network card which is inserted in a Universal Serial Bus (USB) interface of computer, have been difficult to meet the requirements of people for flexibility and portability.

EP 2 387 286 A1 and US 2011/164598 A1 provide respective technical solutions; however, the above mentioned problem still remains unsolved.

### Summary

The invention is set out in the appended set of claims. The embodiments and/or examples of the following description which are not covered by the appended claims are considered as not being part of the present invention.

The embodiments of the present invention provide a mobile hotspot device and a method for accessing a network, so as to solve the problem that the network access mode in related technologies is difficult to meet the requirements of people for flexibility and portability.

According to an embodiment of the present invention, a mobile hotspot device is provided. The mobile hotspot device includes: an interface module, which is configured to provide a power interface and data communication; and a wireless communication module, which is coupled with the interface module, and configured to provide a network access mode corresponding to the power interface and control a terminal to access a network according to a current network access mode.

In an example embodiment, the interface module includes: at least one interface and an interface control unit, wherein the interface control unit is coupled with the at least one interface, and configured to provide a data transmission channel between the at least one interface and the wireless communication module.

In an example embodiment, the at least one interface includes at least one of the followings: Alternate Current (AC) 220V power interface, adapter interface, Ethernet interface and USB interface.

In an example embodiment, the interface module further includes at least one of the followings: AC-Direct Current (DC) power conversion unit, which is coupled between the AC 220V power interface and the interface control unit, and configured to convert an AC 220V power into a DC power required by the wireless communication module; DC-DC power conversion unit, which is coupled between the adapter interface and the interface control unit, and configured to convert a DC power output by the adapter interface into the DC power required by the wireless communication module; Power Over Ethernet (POE) power supply unit, which is coupled between the Ethernet interface and the interface control unit, and configured to supply power for the wireless communication module over the Ethernet; Local Area Network (LAN)-USB signal conversion unit, which is coupled between the Ethernet interface and the interface control unit, and configured to utilize an LAN-USB protocol chip to convert an Ethernet interface signal into a USB signal; and USB interface unit, which is coupled between the USB interface and the interface control unit, and configured to provide the wireless communication module with the required DC power and USB communication.

In an example embodiment, the Ethernet interface is an RJ-45 cable interface.

In an example embodiment, the interface control unit includes: a determining subunit, which is configured to monitor an input voltage of the at least one interface, and determine a current interface mode; and a switch control subunit, which is configured to switch to an interface corresponding to the current interface mode.

In an example embodiment, the determining subunit is further configured to, when it is monitored that multiple interfaces have input voltage simultaneously, determine the current interface mode according to priorities of the multiple interfaces.

In an example embodiment, the interface control unit further includes: a USB hub, which is coupled with the LAN-USB signal conversion unit and the USB interface unit, and configured to allow, in a soft hand-over mode, the LAN-USB signal conversion unit or the USB interface unit to communicate with the wireless communication module.

In an example embodiment, the wireless communication module includes: a USB interface, which is configured to provide the data transmission channel for the wireless communication module; and an application processor, which is configured to control the terminal to access a network in a network access mode corresponding to the current interface mode, wherein the network access mode at least includes one of the followings: accessing an LAN through a wired network interface, accessing a Wide Area Network (WAN) in a wireless mode, and Wireless Fidelity (WiFi) LAN coverage.

In an example embodiment, the wireless communication module further includes: a wireless unit, which is configured to provide a wireless network access; a WiFi unit, which is configured to provide the WiFi LAN coverage; and a power supply unit, which is configured to supply power to the application processor, the wireless unit and the WiFi unit for normal work.

According to another embodiment of the present invention, a method for accessing a network, based on the above mobile hotspot device, is provided. The method for accessing a network includes: determining a current interface mode; and determining the current network access mode according to the current interface mode, and controlling a terminal to access a network according to the current network access mode.

In an example embodiment, determining the current interface mode includes: monitoring whether each interface has an input voltage; for the interface having an input voltage, determining the current interface mode according to a priority of the interface.

In an example embodiment, controlling the terminal to access the network according to the current network access mode includes: determining whether there is a terminal applying for access, and whether the number of terminals which have accessed is more than 0; if there is a terminal applying for access, and the number of the terminals which have accessed is more than 0, then determining whether the number of the terminals which have accessed is more than a maximum number of terminals which are allowed by the WiFi unit to access simultaneously; if there is no terminal applying for access, and there is no terminal which has accessed currently, the WiFi unit entering a standby state.

In an example embodiment, after determining whether the number of the terminals which have accessed is more than the maximum number of the terminals which are allowed by the WiFi unit to access simultaneously, the method further includes: if the number of the terminals which have accessed is not more than the maximum number of the terminals which are allowed to access simultaneously, then allowing the terminal to access the network.

In an example embodiment, after the WiFi unit enters the standby state, the method further includes: waking the WiFi unit up up periodically, and polling whether there is a terminal applying for access.

The solution effectively buckles two independent products together, i.e. the interface module and the wireless communication module, thereby maintaining the small volume of conventional handheld terminals, facilitating to carry. In addition, the solution supports various interface modes, and functionally supports Local Area Network (LAN) wired access, Wide Area Network (WAN) wireless access and Wireless Fidelity (WiFi) LAN coverage, which provides various flexible network access modes for users. The solution meets requirements for portability and miniaturization, has relatively high universality, and is simple and feasible.

### Brief Description of the Drawings

The accompanying drawings described here are used for providing a deeper understanding of the present invention, and constitute a part of the application; schematic embodiments of the present invention and description thereof are used for illustrating the present invention and not intended to form improper limit to the present invention. In the accompanying drawings:
Fig. 1 is a structural diagram of a mobile hotspot device according to an embodiment of the present invention;
Fig. 2 is a flowchart of a method for accessing a network according to an embodiment of the present invention;
Fig. 3a is a first structural diagram of a mobile hotspot device according to an example embodiment of the present invention;
Fig. 3b is a second structural diagram of a mobile hotspot device according to an example embodiment of the present invention;
Fig. 3c is an interface distribution diagram of a mobile hotspot device according to an example embodiment of the present invention;
Fig. 4 is a structural diagram of a mobile hotspot device according to an example embodiment of the present invention;
Fig. 5 is a structural diagram of an interface module according to an example embodiment of the present invention;
Fig. 6 is a structural diagram of a POE power supply module according to an example embodiment of the present invention;
Fig. 7 is a structural diagram of a DC/DC module according to an example embodiment of the present invention;
Fig. 8 is a structural diagram of an interface control module according to an example embodiment of the present invention;
Fig. 9 is a structural diagram of a wireless communication module according to an example embodiment of the present invention;
Fig. 10 is a flowchart that a mobile hotspot device accesses, in a wireless mode, the WAN to work according to an example embodiment of the present invention; and
Fig. 11 is a flowchart that a mobile hotspot device accesses, through an RJ-45 cable, the LAN to work according to an example embodiment of the present invention.

### Detailed Description of the Embodiments

Note that, embodiments and features in embodiments in the application can be combined with each other on condition of not conflicting. The present invention is elaborated below with reference to the accompanying drawings and in combination with embodiments.

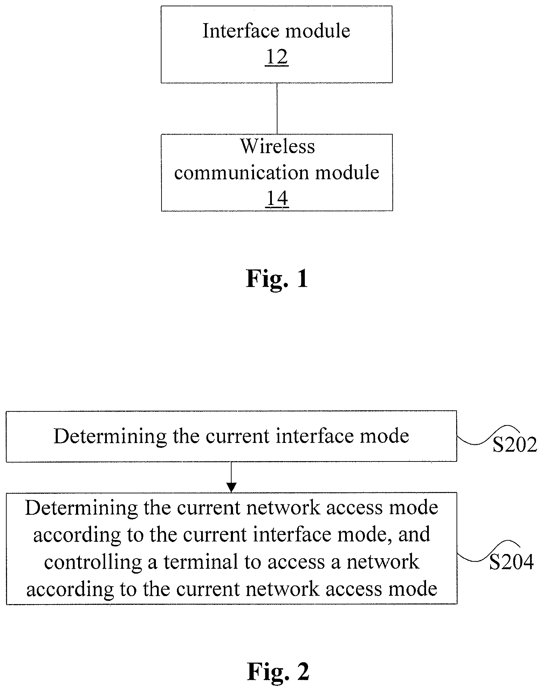

The present invention provides a mobile hotspot device. Fig. 1 is a structural diagram of the mobile hotspot device according to an embodiment of the present invention. As shown in Fig. 1, the mobile hotspot device includes an interface module 12 and a wireless communication module 14. The structure of the mobile hotspot device is elaborated below.

The interface module 12 is configured to provide a power interface and data communication; the wireless communication module 14 is coupled with the interface module 12, and configured to provide a network access mode corresponding to the power interface and control a terminal to access a network according to the current network access mode.

In related technologies, the network access mode is difficult to meet the requirements of people for flexibility and portability; for example, the original ways, like accessing a network through an Ethernet interface, or accessing a network through a wireless local area network card which is inserted in a USB interface of computer, are not flexible enough. The embodiment of the present invention effectively buckles two independent products together, i.e. the interface module and the wireless communication module, thereby maintaining the small volume of conventional handheld terminals, facilitating to carry. In addition, the solution supports various interface modes, and functionally supports Local Area Network (LAN) wired access, Wide Area Network (WAN) wireless access and Wireless Fidelity (WiFi) LAN coverage, which provides various flexible network access modes for users. The solution meets requirements for portability and miniaturization, has relatively high universality, and is simple and feasible.

In an example embodiment, the interface module 12 includes: at least one interface and an interface control unit; wherein, the interface control unit is coupled with the at least one interface, and configured to provide a data transmission channel between the at least one interface and the wireless communication module 14. The at least one interface includes at least one of the followings: AC 220V power interface, adapter interface, Ethernet interface and USB interface. In an example embodiment, the Ethernet interface is an RJ-45 cable interface. The embodiment of the present invention supports various interface modes, that is, any access of AC 220V, adapter, network interface and USB interface can be implemented anywhere.

Corresponding to the various interfaces, the interface module further includes at least one of the followings: AC-DC power conversion unit, which is coupled between the AC 220V power interface and the interface control unit, and configured to convert an AC 220V power into a DC power required by the wireless communication module 14; DC-DC power conversion unit, which is coupled between the adapter interface and the interface control unit, and configured to convert a DC power output by the adapter interface into the DC power required by the wireless communication module 14; POE power supply unit, which is coupled between the Ethernet interface and the interface control unit, and configured to supply power for the wireless communication module 14 over the Ethernet; LAN-USB signal conversion unit, which is coupled between the Ethernet interface and the interface control unit, and configured to utilize an LAN-USB protocol chip to convert an Ethernet interface signal into a USB signal; and USB interface unit, which is coupled between the USB interface and the interface control unit, and configured to provide the wireless communication module 14 with the required DC power and USB communication.

In an example embodiment, the interface control unit includes: a determining subunit, which is configured to monitor an input voltage of the at least one interface, and determine a current interface mode; and a switch control subunit, which is configured to switch to an interface corresponding to the current interface mode. In an example embodiment, the determining subunit is further configured to, when it is monitored that multiple interfaces have input voltage simultaneously, determine the current interface mode according to the priorities of the multiple interfaces.

The interface control unit further includes: a USB hub, which is coupled with the LAN-USB signal conversion unit and the USB interface unit, and configured to allow, in a soft hand-over mode, the LAN-USB signal conversion unit or the USB interface unit to communicate with the wireless communication module 14.

The wireless communication module 14 includes: a USB interface, which is configured to provide a data transmission channel for the wireless communication module 14; and an application processor, which is configured to control the terminal to access a network in a network access mode corresponding to the current interface mode, wherein the network access mode at least includes one of the followings: accessing the LAN through a wired network interface, accessing the WAN in a wireless mode, and WiFi LAN coverage. Thus, the LAN wired access, the WAN wireless access and the WiFi LAN coverage are supported functionally, and various flexible network access modes are provided for users.

In an example embodiment, the wireless communication module 14 further includes: a wireless unit, which is configured to provide a wireless network access; a WiFi unit, which is configured to provide the WiFi LAN coverage; and a power supply unit, which is configured to supply power to the application processor, the wireless unit and the WiFi unit for normal work.

The embodiment of the present invention also provides a method for accessing a network, which can be implemented based on the mobile hotspot device. Fig. 2 is a flowchart of the method for accessing a network according to an embodiment of the present invention. As shown in Fig. 2, the method includes the following Step 202 to Step 204.

Step 202: Determining a current interface mode.

Step 204: Determining a current network access mode according to the current interface mode, and controlling a terminal to access a network according to the current network access mode.

In related technologies, the network access mode is difficult to meet the requirements of people for flexibility and portability; for example, the original ways, like accessing a network through an Ethernet interface, or accessing a network through a wireless local area network card which is inserted in a USB interface of computer, are not flexible enough. The embodiment of the present invention effectively buckles two independent products together, i.e. the interface module and the wireless communication module, thereby maintaining the small volume of conventional handheld terminals, facilitating to carry. In addition, the solution supports various interface modes, and functionally supports Local Area Network (LAN) wired access, Wide Area Network (WAN) wireless access and Wireless Fidelity (WiFi) LAN coverage, which provides various flexible network access modes for users. The solution meets requirements for portability and miniaturization, has relatively high universality, and is simple and feasible.

Step 202 includes: monitoring whether each interface has an input voltage; for the interface having an input voltage, determining the current interface mode according to a priority of the interface.

Controlling a terminal to access a network according to the current network access mode includes: determining whether there is a terminal applying for access, and whether the number of the terminals which have accessed is more than 0; if there is a terminal applying for access, and the number of the terminals which have accessed is more than 0, then determining whether the number of the terminals which have accessed is more than the maximum number of the terminals which are allowed by the WiFi unit to access simultaneously; if there is no terminal applying for access, and there is no terminal which has accessed currently, the WiFi unit entering a standby state.

In an example embodiment, after determining whether the number of the terminals which have accessed is more than the maximum number of the terminals which are allowed by the WiFi unit to access simultaneously, the method further includes: if the number of the terminals which have accessed is not more than the maximum number of the terminals which are allowed to access simultaneously, then allowing the terminal to access the network.

In an example embodiment, after the WiFi unit enters the standby state, the method further includes: waking the WiFi unit up periodically, and polling whether there is a terminal applying for access.

To sum up, because the two independent products, i.e. the interface module and the wireless communication module are integrated, the mobile hotspot device of the embodiment of the present invention requires no additional space structurally; the mobile hotspot device supports various interface modes, the AC 220V power interface, the adapter interface, the Ethernet interface and the USB interface, thus providing flexible selection for users; the mobile hotspot device functionally supports the LAN wired access, the WAN wireless access and the WiFi LAN coverage, thus providing various network access modes for users.

For making the technical solutions and the implementation method of the embodiments of the present invention more clear, its implementation process is elaborated below with reference to the example embodiments.

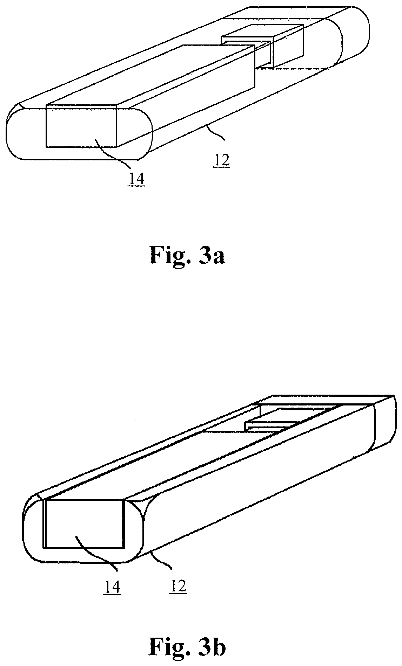

Fig. 3a is a first structural diagram of the mobile hotspot device according to an example embodiment of the present invention. As shown in Fig. 3a, the wireless communication module 14 may be plugged on a front panel of the interface module 12, and then integrally buckled in the interface module; the wireless communication module 14 has a USB interface and may be plugged into the interface module 12, thus requiring no additional space.

Fig. 3b is a second structural diagram of the mobile hotspot device according to an example embodiment of the present invention. As shown in Fig. 3b, the wireless communication module 14 is half encapsulated in the interface module 12.

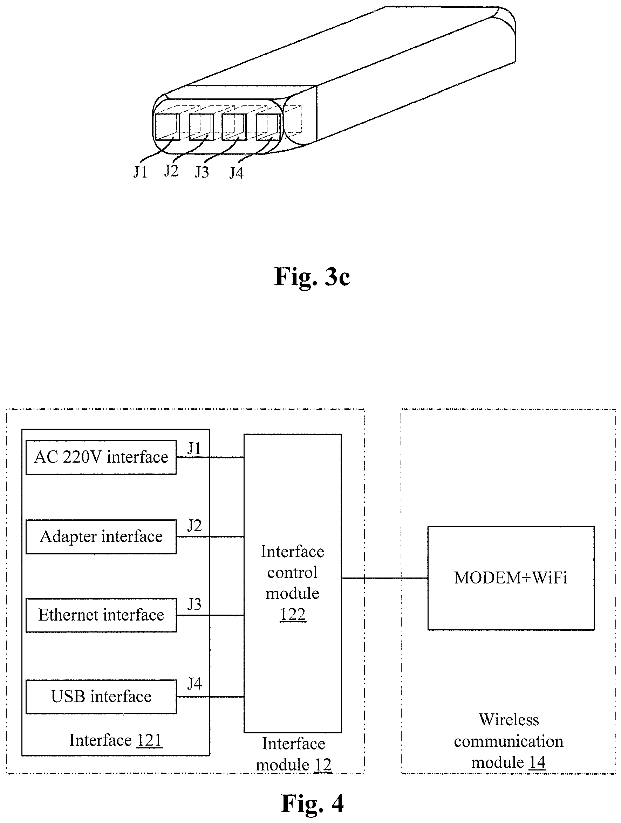

Fig. 3c is an interface distribution diagram of the mobile hotspot device according to an example embodiment of the present invention. As shown in Fig. 3c, the AC 220V power interface J1, the adapter interface J2, the Ethernet interface J3 and the USB interface J4 are distributed on the front panel of the interface module 12, and the back of the front panel is distributed with interface circuits and interface control modules corresponding to these interfaces. Note that, the distribution mode of the interfaces is not limited to such mode shown in Fig. 3c, but can be various; no matter which mode, provided the solution is accordant with the embodiment of the present invention, the mode shall fall within the scope of the claims of the present invention.

Fig. 4 is a structural diagram of the mobile hotspot device according to an example embodiment of the present invention. As shown in Fig. 4, the mobile hotspot device includes the interface module 12 and the wireless communication module 14.

The interface module 12 provides the mobile hotspot device with any power interface and data communication, and includes at least one interface 121 and an interface control module 122. The interface module 12 supports the AC 220V power interface J1, the adapter interface J2, the Ethernet interface J3 (namely cable interface) and the USB interface J4 which are distributed on the front panel of the interface module 12. Fig. 3c shows an interface distribution mode as an example, but the four interfaces are not limited to such distribution mode. The interface control module 122 (implementing the function of the interface control unit) provides power and a data transmission channel between each interface and the wireless communication module 14; for the situation that several interfaces access simultaneously, the interface with the highest priority is selected to work.

The wireless communication module 14 can provide the LAN wired access, the WAN wireless access and the WiFi LAN coverage. The WAN wireless access can access a wireless network through the Global System for Mobile Communication (GSM), the Code Division Multiple Access (CDMA), the Wideband Code Division Multiple Access (WCDMA), the Long-Term Evolution (LTE) and any other wireless communication system. The WiFi LAN coverage is convenient for any wireless device of users to access. The wireless communication module 14 has the USB interface and may be plugged in an interface module M1, thus requiring no additional space. As shown in Fig. 3a and Fig. 3b, these two modes are only the embodiments of the present invention, all the implementation modes which can couple the wireless communication module 14 and the interface module 12 together, and does not increase the volume of the device additionally shall fall within the scope of the claims of the present invention. At the same time, the wireless communication module 14 may also be plugged into a computer directly or through a USB cable to work as an independent product.

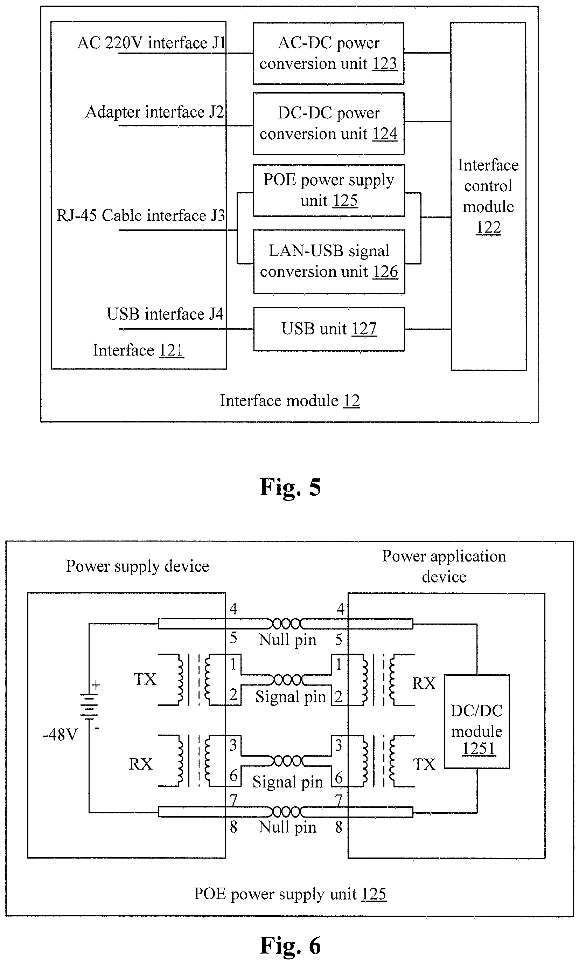

The interface module 12 and the wireless communication module 14 are elaborated below in combination with Fig. 5 to Fig. 9.

Fig. 5 is a structural diagram of the interface module according to an example embodiment of the present invention. As shown in Fig. 5, the interface module 12 includes at least one interface 121, an interface control module 122, an AC-DC power conversion module 123, a DC-DC power conversion module 124, a POE power supply module 125, an LAN-USB signal conversion module 126 and a USB interface 127. These circuit modules are distributed on the back of the front panel of the interface module 12.

The AC-DC power conversion module 123 (implementing the function of the AC-DC power conversion unit) converts an AC 220V power into a DC power required by the wireless communication module 14 efficiently.

The DC-DC power conversion module 124 (implementing the function of the DC-DC power conversion unit) converts a DC power output by the adapter into a DC power required by the wireless communication module 14 efficiently.

The POE power supply module 125 (implementing the function of the POE power supply unit), wherein the POE means supplying power through the 10BASE-T Ethernet, the 100BASE-TX Ethernet and the 1000BASE-T Ethernet, and the longest distance of reliable power supply is 100 meters. The POE technology can ensure the normal operation of existing network while insuring the safety of existing structured cabling, and minimize the cost. The IEEE802.3af standard is a new standard based on the POE, increasing related standards of directly supplying power through the cable on the basis of IEEE802.3; it is an extension of the existing Ethernet standard, and is also the first international standard about power distribution. This standard specifies that the POE can provide power supply of 48V, 13W.

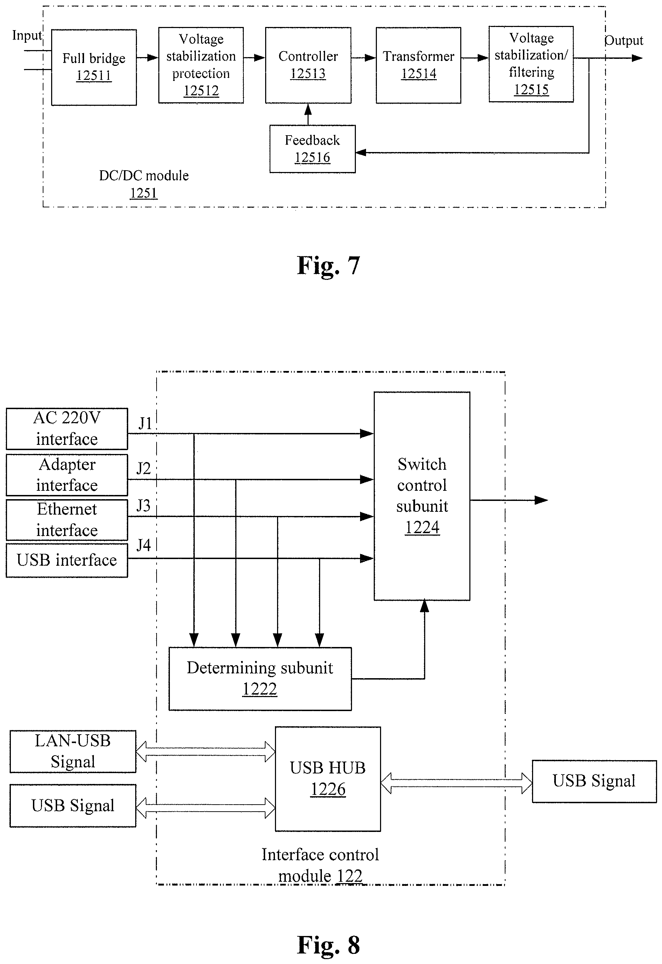

Fig. 6 is a structural diagram of the POE power supplying module according to an example embodiment of the present invention. Fig. 6 is an embodiment of use allowed by the IEEE802.3af, but it is not limited to this mode. A functional structure of a DC/DC module 1251 is shown in Fig. 7. A full bridge 12511 allows power input from any direction; a voltage stabilization protection 12512 protects the DC/DC module 1251, avoiding damage caused by high voltage; a controller 12513 can convert an input power into a high-frequency square wave efficiently in a Pulse Width Modulation (PWM) mode; a transformer 12514 couples an AC square wave to an output end; after voltage stabilization/filtering 12515, the DC power required by the wireless communication module 14 can be output; a feedback 12516 feeds an output power back to the controller 12513, so that the controller 12513 follows up error to dynamically adjust in real time, which makes the output power more accurate.

The LAN-USB signal conversion module 126 (implementing the function of the LAN-USB signal conversion unit) utilizes the LAN-USB protocol chip to convert an RJ-45 network interface signal into a USB signal.

The USB interface 127 (implementing the function of the USB interface unit) can provide the mobile hotspot device with the DC power and USB communication required by the wireless communication module 14. Fig. 8 is a structural diagram of the interface control module according to an example embodiment of the present invention. As shown in Fig. 8, the interface control module 122 includes a determining module 1222, a switch control module 1224 and a USB hub 1226.

The determining module 1222 (implementing the function of the determining subunit) determines an interface mode by monitoring the four interfaces J1 to J4, and controls the switch control module 1224 (implementing the function of the switch control subunit) to switch to the corresponding interface, thus ensuring the power and a data signal to reach the wireless communication module 14 reliably. For example, it is found by comparing through the determining module 1222 that the interface J1 has an input voltage, then the determining module 1222 controls the switch control module 1224 to switch to the interface J1, thus the power input from the AC 220V interface can be supplied to the wireless communication module 14 after conversion. For the situation that several interfaces access simultaneously, all the interfaces accessing are determined by the determining module 1222, and the switch control module 1224 is controlled to switch to the interface with the highest priority according to a certain priority order. The USB hub 1226, between the cable and the USB interface, allows them to communicate with the wireless communication module 14 in a soft hand-over mode.

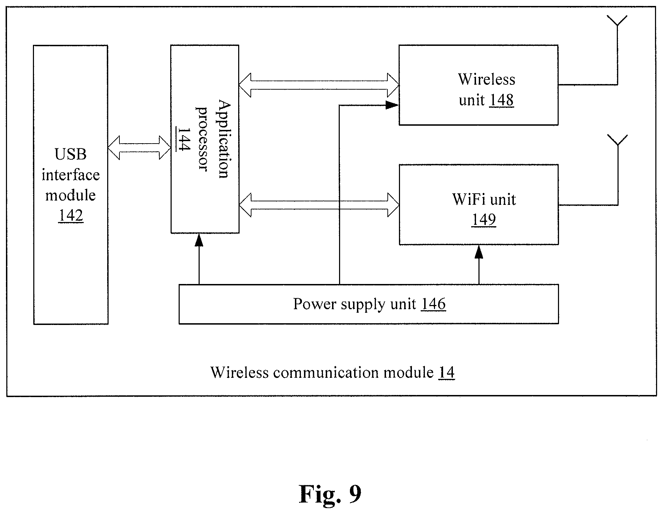

Fig. 9 is a structural diagram of the wireless communication module according to an example embodiment of the present invention. As shown in Fig. 9, the wireless communication module 14 includes a USB interface module 142, an application processor 144, a power supply module 146, a wireless module 148 and a WiFi module 149.

The USB interface module 142 provides the data transmission channel for the wireless communication module 14, and can communicate with the interface module 12 or the computer directly.

The application processor 144 can control the wireless communication module 14 to access the LAN through a wired network interface, or access the WAN in a wireless mode. After the wireless communication module 14 accesses the WAN or the LAN, the WiFi module 149 is controlled through the application processor 144 to realize the WiFi LAN coverage.

The power supply module 146 (implementing the function of the power supply unit) supplies power to the wireless module 148 and the WiFi module 149 for normal work.

The wireless module 148 (implementing the function of the wireless unit) provides the wireless network access for users through the GSM, the CDMA, the WCDMA, the LTE and any other communication system.

The WiFi module 149 (implementing the function of the WiFi unit) provides Wireless Local Area Network (WLAN) coverage, and allows one or more wireless terminals to access simultaneously.

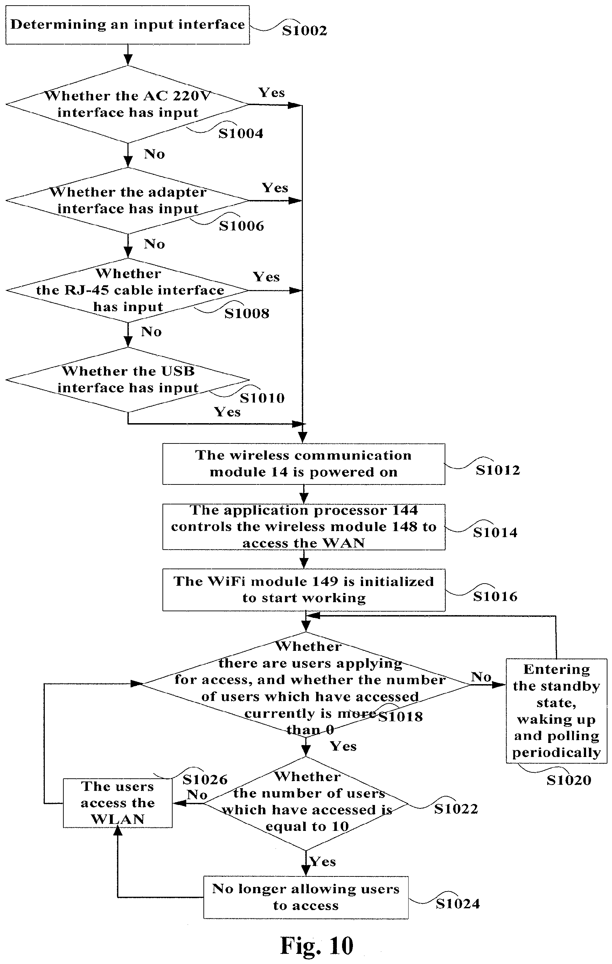

Fig. 10 is a flowchart that a mobile hotspot device accesses, in a wireless mode, a WAN to work according to an example embodiment of the present invention. As shown in Fig. 10, the flow includes the following steps.

Step 1002: Determining an input interface.

Step 1004: Determining whether the AC 220V interface has input; if so, executing Step 1012; or else, executing Step 1006.

Step 1006: Determining whether the adapter interface has input; if so, executing Step 1012; or else, executing Step 1008.

Step 1008: Determining whether the RJ-45 cable interface has input; if so, executing Step 1012; or else, executing Step 1010.

Step 1010: Determining whether the USB interface has input; if so, executing Step 1012; or else, it is considered that there is no any interface inputting, and the subsequent operation is not performed.

Step 1012: The wireless communication module 14 is powered on to start working.

Step 1014: The application processor 144 controls the wireless module 148 to access the WAN through the GSM, the CDMA, the WCDMA, the LTE and any other communication system, so as to provide the wireless network access for users.

Step 1016: The application processor 144 initializes the WiFi module 149; the WiFi module 149 starts working to provide users with a WLAN network which is available to access.

Step 1018: The WiFi module 149 monitors whether there are users applying for access, and whether the number of users which have accessed currently is more than 0; if not, that is, there is no user accessing, and there is no user applying for access, executing Step 1020; if so, executing Step 1022.

Step 1020: The WiFi module 149 enters the standby state and can be woken up periodically; polling whether there are users applying for access.

Step 1022: The WiFi module 149 monitors whether the number of users which have accessed is equal to 10 (in the present example embodiment, suppose the maximum number of the users which are allowed by the WiFi unit to access simultaneously is 10), if it is less than 10, executing Step 1026; or else, executing Step 1024.

Step 1024: Allowing users to access the WLAN to work normally. After that, there will be users quitting, and there will also be users applying for access, so, turning to Step 1018 to circularly monitor whether there are users applying for access.

Step 1026: No longer allowing users to access; during this period, there will be users quitting, and there may be users applying for access, turning to Step 1018 to circularly determine.

Note that, in Step 1004 to Step 1010, the interface control module 122 determines the interfaces inputting according to the priority order, and controls the switch control module 1224 to switch to the corresponding interface, thus ensuring the power and the data signal to reach the wireless communication module 14 reliably. There is no sequence to determine whether each interface has input, and Fig. 10 is only an example diagram.

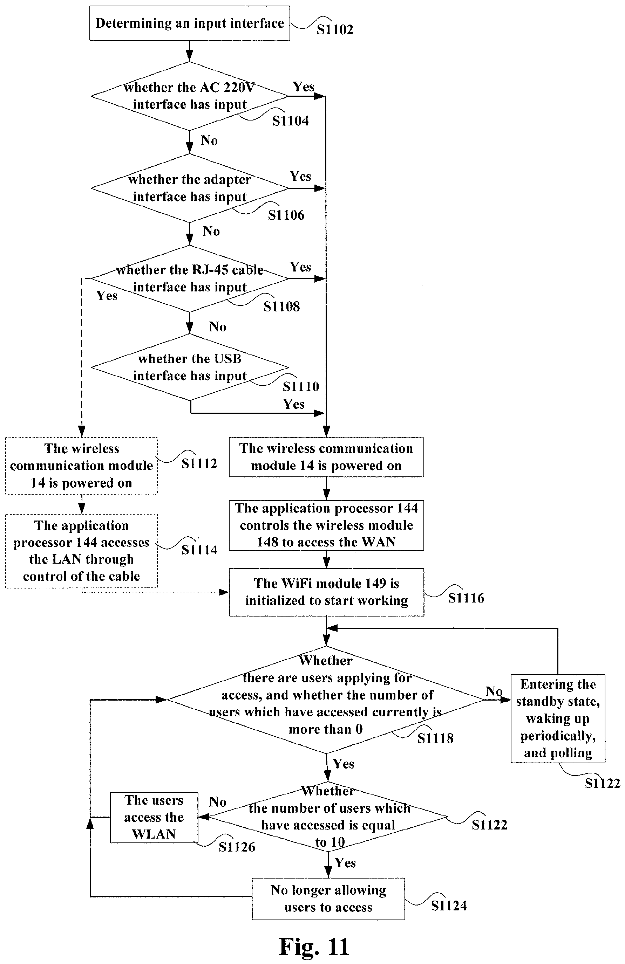

Fig. 11 is a flowchart that a mobile hotspot device accesses, through an RJ-45 cable, the LAN to work according to an example embodiment of the present invention. As shown in the dotted portion of Fig. 11, the flow includes the following steps.

The steps from Step 1102 to Step 1112 are basically the same as the steps from Step 1002 to Step 1012, so they will not be repeated here. As shown in the dotted portion of Fig. 11, in the present example embodiment, the interface control module 122 determines that it is the Ethernet interface J3 inputting, and controls the switch control module 1224 to switch to the Ethernet interface; the power through the POE power supply module 125, and the signal through the LAN-USB signal conversion module 126 reach the wireless communication module 14 reliably.

Step 1114: The application processor 144 accesses the LAN through control of the cable.

The steps from Step 1116 to Step 1126 are the same as the steps from Step 1016 to Step 1026, so they will not be repeated here.

Note that, these steps presented in the flowchart of the accompanying drawings can be executed in a computer system like a group of machine-executable instructions; besides, although a logical sequence is shown in the flowchart, in some cases, the presented or described steps can be executed in an order different from that described here.

To sum up, according to the embodiments of the present invention, a mobile hotspot device and a method for accessing a network are provided. The solution of the embodiments of the present invention effectively buckles two independent products together, i.e. the interface module and the wireless communication module, thereby maintaining the small volume of conventional handheld terminals, facilitating to carry. In addition the solution supports various interface modes, and functionally supports Local Area Network (LAN) wired access, Wide Area Network (WAN) wireless access and Wireless Fidelity (WiFi) LAN coverage, which provides various flexible network access modes for users. The solution meets requirements for portability and miniaturization, has relatively high universality, and is simple and feasible.

Obviously, those skilled in the art should appreciate that the above modules and steps of the present invention can be implemented by a general-purpose computing device, and they can be centralized in a single computing device or distributed on a network composed of multiple computing devices; optionally, they can be implemented by program code which is capable of being executed by the computing device, so that they can be stored in a storage device and executed by the computing device, or they are made into integrated circuit modules, respectively, or multiple modules and steps of them are made into a single integrated circuit module to implement. In this way, the present invention is not limited to any particular combination of hardware and software.

The above is only the example embodiment of the present invention and not intended to limit the present invention; for the skilled personnel in the field, the present invention may have various modifications and changes. Any modifications, equivalent replacements, improvements and the like within the principle of the present invention shall fall within the scope of the claims of the present invention.

## Claims

1. A mobile hotspot device for providing data communication between a terminal and a network, wherein the mobile hotspot device comprises an interface module (12) and a wireless communication module (14) which is coupled with the interface module (12); the terminal is connected to the wireless communication module (14) via a first wireless interface and the network is connected to the interface module (12) over an Ethernet interface or to the wireless communication module (14) over a second wireless interface;
the interface module (12) comprises an interface control unit (122) and is further configured to provide a plurality of different power interfaces (121), whereby one of the plurality of different power interfaces (121) comprises the Ethernet interface and a Power Over Ethernet, POE, power supply unit (125), the interface control unit (122) is configured to determine which of the plurality of different power interfaces (121) currently supplies the mobile hotspot device with power and as a result of determining that the mobile hotspot device is supplied via the Ethernet interface, the wireless communication module (14) controls the mobile hotspot device to connect to the network via the Ethernet interface, and else the wireless communication module (14) controls the mobile hotspot device to connect to the network via the second wireless interface.

2. The mobile hotspot device according to claim 1, **characterized in that** the plurality of different power interfaces (121) further comprises at least one of the followings: Alternate Current, AC, 220V power interface, an interface for connecting a Direct Current, DC, power interface, and Universal Serial Bus, USB, interface.

3. The mobile hotspot device according to claim 2, **characterized in that** the interface module (12) further comprises at least one of the followings:
AC-Direct Current, DC, power conversion unit (123), which is coupled between the AC 220V power interface and the interface control unit (122), and configured to convert an AC 220V power into a DC power required by the wireless communication module (14);
DC-DC power conversion unit (124), which is coupled between the interface for connecting the DC power interface and the interface control unit (122), and configured to convert a DC power output by the interface for connecting the DC power interface into the DC power required by the wireless communication module (14);
Local Area Network, LAN-USB signal conversion unit (126), which is coupled between the Ethernet interface and the interface control unit (122), and configured to utilize an LAN-USB protocol chip to convert an Ethernet interface signal into a USB signal; and
USB interface unit (127), which is coupled between the USB interface and the interface control unit (122), and configured to provide the wireless communication module (14) with the required DC power and USB communication.

4. The mobile hotspot device according to claim 1 or 3, **characterized in that** the Ethernet interface is an RJ-45 cable interface.

5. The mobile hotspot device according to claim 1, **characterized in that** the interface control unit (122) comprises:
a determining subunit (1222), which is configured to monitor an input voltage of the plurality of different power interfaces (121), and determine which of the plurality of different power interfaces (121) currently supplies the mobile hotspot device with power; and
a switch control subunit (1224), which is configured to switch to the interface (121) which currently supplies the mobile hotspot device with power.

6. The mobile hotspot device according to claim 5, **characterized in that** the determining subunit (1222) is further configured to, when it is monitored that multiple interfaces (121) have input voltage simultaneously, determine which of the plurality of different power interfaces (121) currently supplies the mobile hotspot device with power according to priorities of the plurality of different power interfaces (121).

7. The mobile hotspot device according to claim 5, **characterized in that** the interface control unit (122) further comprises:
a USB hub (1226), which is coupled with the LAN-USB signal conversion unit (126) and the USB interface unit (127), and configured to allow the LAN-USB signal conversion unit (126) or the USB interface unit (127) to communicate with the wireless communication module (14).

8. The mobile hotspot device according to claim 5, **characterized in that** the wireless communication module (14) comprises:
a USB interface (142), which is configured to provide a data transmission channel for the wireless communication module (14); and
an application processor (144), which is configured to control the mobile hotspot device to connect to the network based on a result of determining which of the plurality of different power interfaces (121) currently supplies the mobile hotspot device with power, wherein the mobile hotspot device is controlled to access the network in one of the following modes: accessing an LAN through a wired network interface, and accessing a Wide Area Network, WAN, in a wireless mode.

9. The mobile hotspot device according to claim 8, **characterized in that** the wireless communication module (14) further comprises:
a wireless unit (148), which is configured to provide a wireless network access;
a WiFi unit (149), which is configured to provide a Wireless Fidelity (WiFi) LAN coverage; and
a power supply unit (146), which is configured to supply power to the application processor (144), the wireless unit (148) and the WiFi unit (149) for normal work.

10. A method for accessing a network, **characterized in that** the method is performed by the mobile hotspot device according to any one of claims 1 to 9, and the method comprises:
determining which of the plurality of different power interfaces (121) currently supplies the mobile hotspot device with power;
as a result of determining that the mobile hotspot device is supplied via the Ethernet interface, controlling, by the wireless communication module (14), the mobile hotspot device to connect to the network via the Ethernet interface, and else controlling, by the wireless communication module (14), the mobile hotspot device to connect to the network via the second wireless interface.

11. The method according to claim 10, **characterized in that** determining which of the plurality of different power interfaces (121) currently supplies the mobile hotspot device with power comprises:
monitoring an input voltage of the plurality of different power interfaces (121);
determining which of the plurality of different power interfaces (121) currently supplies the mobile hotspot device with power according to priorities of the plurality of different power interfaces (121).

12. The method according to claim 10, **characterized in that** the method further comprises:
determining whether there is a terminal applying for access, and whether the number of terminals which have accessed is more than 0;
if there is a terminal applying for access, and the number of the terminals which have accessed is more than 0, then determining whether the number of the terminals which have accessed is more than a maximum number of terminals which are allowed by a Wireless Fidelity, WiFi, unit to access simultaneously;
if there is no terminal applying for access, and there is no terminal which has accessed currently, the WiFi unit entering a standby state.

13. The method according to claim 12, **characterized in that** after determining whether the number of the terminals which have accessed is more than the maximum number of the terminals which are allowed by the WiFi unit to access simultaneously, the method further comprises:
if the number of the terminals which have accessed is not more than the maximum number of the terminals which are allowed by the WiFi unit to access simultaneously, then allowing the terminal to access the network.

14. The method according to claim 12, **characterized in that** after the WiFi unit enters the standby state, the method further comprises:
waking the WiFi unit up periodically, and polling whether there is a terminal applying for access.

## Patentansprüche

1. Eine Mobil-Hotspot-Vorrichtung zum Bereitstellen einer Datenkommunikation zwischen einem Endgerät und einem Netz, wobei die Mobil-Hotspot-Vorrichtung ein Schnittstellenmodul (12) und ein Drahtloskommunikationsmodul (14) aufweist, das mit dem Schnittstellenmodul (12) gekoppelt ist; wobei das Endgerät über eine erste Drahtlosschnittstelle mit dem Drahtloskommunikationsmodul (14) verbunden ist und das Netz über eine Ethernet-Schnittstelle mit dem Schnittstellenmodul (12) oder über eine zweite Drahtlosschnittstelle mit dem Drahtloskommunikationsmodul (14) verbunden ist;
wobei das Schnittstellenmodul (12) eine Schnittstellensteuereinheit (122) aufweist und ferner ausgebildet ist, um eine Mehrzahl unterschiedlicher Leistungsschnittstellen (121) bereitzustellen, wodurch eine der Mehrzahl unterschiedlicher Leistungsschnittstellen (121) die Ethernet-Schnittstelle und eine Leistung-über-Ethernet-, POE(POE = Power over Ethernet)-, Leistungsversorgungseinheit (125) aufweist, wobei die Schnittstellensteuereinheit (122) ausgebildet ist, um zu bestimmen, welche der Mehrzahl unterschiedlicher Leistungsschnittstellen (121) momentan die Mobil-Hotspot-Vorrichtung mit Leistung versorgt, und als ein Ergebnis des Bestimmens, dass die Mobil-Hotspot-Vorrichtung über die Ethernet-Schnittstelle versorgt wird, das Drahtloskommunikationsmodul (14) die Mobil-Hotspot-Vorrichtung steuert, eine Verbindung zu dem Netz über die Ethernet-Schnittstelle herzustellen, und andernfalls das Drahtloskommunikationsmodul (14) die Mobil-Hotspot-Vorrichtung steuert, eine Verbindung zu dem Netz über die zweite Drahtlosschnittstelle herzustellen.

2. Die Mobil-Hotspot-Vorrichtung gemäß Anspruch 1, die **dadurch gekennzeichnet ist, dass** die Mehrzahl unterschiedlicher Leistungsschnittstellen (121) ferner zumindest eine der folgenden aufweist: Wechselstrom-, AC-, 220V-Leistungsschnittstelle, eine Schnittstelle zum Anschließen einer Gleichstrom-, DC-, Leistungsschnittstelle und eine Universal-Seriell-Bus-, USB-, Schnittstelle.

3. Die Mobil-Hotspot-Vorrichtung gemäß Anspruch 2, die **dadurch gekennzeichnet ist, dass** das Schnittstellenmodul (12) ferner zumindest eine der folgenden aufweist:
eine AC-Gleichstrom-, -DC-, Leistungsumwandlungseinheit (123), die zwischen die AC-220V-Leistungsschnittstelle und die Schnittstellensteuereinheit (122) geschaltet und ausgebildet ist, um eine AC-220V-Leistung in eine DC-Leistung umzuwandeln, die durch das Drahtloskommunikationsmodul (14) benötigt wird;
eine DC-DC-Leistungsumwandlungseinheit (124), die zwischen die Schnittstelle zum Schalten der DC-Leistungsschnittstelle und die Schnittstellensteuereinheit (122) geschaltet und ausgebildet ist, um eine DC-Leistung, die durch die Schnittstelle zum Anschließen der DC-Leistungsschnittstelle ausgegeben wird, in die DC-Leistung umzuwandeln, die durch das Drahtloskommunikationsmodul (14) benötigt wird;
eine Lokales-Netz-, LAN-, USB-Signalumwandlungseinheit (126), die zwischen die Ethernet-Schnittstelle und die Schnittstellensteuereinheit (122) geschaltet und ausgebildet ist, um einen LAN-USB-Protokoll-Chip einzusetzen, um ein Ethernet-Schnittstellensignal in ein USB-Signal umzuwandeln; und
eine USB-Schnittstelleneinheit (127), die zwischen die USB-Schnittstelle und die Schnittstellensteuereinheit (122) geschaltet und ausgebildet ist, um das Drahtloskommunikationsmodul (14) mit der erforderlichen DC-Leistung und USB-Kommunikation zu versorgen.

4. Die Mobil-Hotspot-Vorrichtung gemäß Anspruch 1 oder 3, die **dadurch gekennzeichnet ist, dass** die Ethernet-Schnittstelle eine RJ-45-Kabelschnittstelle ist.

5. Die Mobil-Hotspot-Vorrichtung gemäß Anspruch 1, die **dadurch gekennzeichnet ist, dass** die Schnittstellensteuereinheit (122) folgende Merkmale aufweist:
eine Bestimmungsteileinheit (1222), die ausgebildet ist, um eine Eingangsspannung der Mehrzahl unterschiedlicher Leistungsschnittstellen (121) zu überwachen und zu bestimmen, welche der Mehrzahl unterschiedlicher Leistungsschnittstellen (121) momentan die Mobil-Hotspot-Vorrichtung mit Leistung versorgt; und
eine Schaltersteuerteileinheit (1224), die ausgebildet ist, um zu der Schnittstelle (121) zu schalten, die momentan die Mobil-Hotspot-Vorrichtung mit Leistung versorgt.

6. Die Mobil-Hotspot-Vorrichtung gemäß Anspruch 5, die **dadurch gekennzeichnet ist, dass** die Bestimmungsteileinheit (1222) ferner ausgebildet ist, um, wenn überwacht wird, dass mehrere Schnittstellen (121) gleichzeitig eine Eingangsspannung aufweisen, gemäß Prioritäten der Mehrzahl unterschiedlicher Leistungsschnittstellen (121) zu bestimmen, welche der Mehrzahl unterschiedlicher Leistungsschnittstellen (121) momentan die Mobil-Hotspot-Vorrichtung mit Leistung versorgt.

7. Die Mobil-Hotspot-Vorrichtung gemäß Anspruch 5, die **dadurch gekennzeichnet ist, dass** die Schnittstellensteuereinheit (122) ferner folgendes Merkmale aufweist:
einen USB-Netzknoten (1226), der mit der LAN-USB-Signalumwandlungseinheit (126) und der USB-Schnittstelleneinheit (127) gekoppelt und ausgebildet ist, um zu ermöglichen, dass die LAN-USB-Signalumwandlungseinheit (126) oder die USB-Schnittstelleneinheit (127) mit dem Drahtloskommunikationsmodul (14) kommunizieren kann.

8. Die Mobil-Hotspot-Vorrichtung gemäß Anspruch 5, die **dadurch gekennzeichnet ist, dass** das Drahtloskommunikationsmodul (14) folgende Merkmale aufweist:
eine USB-Schnittstelle (142), die ausgebildet ist, um einen Datenübertragungskanal für das Drahtloskommunikationsmodul (14) bereitzustellen; und
einen Anwendungsprozessor (144), der ausgebildet ist, um die Mobil-Hotspot-Vorrichtung basierend auf einem Ergebnis des Bestimmens, welche der Mehrzahl unterschiedlicher Leistungsschnittstellen (121) momentan die Mobil-Hotspot-Vorrichtung mit Leistung versorgt, zu steuern, eine Verbindung zu dem Netz herzustellen, wobei die Mobil-Hotspot-Vorrichtung gesteuert wird, auf einen der folgenden Modi auf das Netz zuzugreifen: Zugreifen auf ein LAN durch eine verdrahtete Netzschnittstelle und Zugreifen auf ein Weitverkehrsnetz, WAN, in einem Drahtlosmodus.

9. Die Mobil-Hotspot-Vorrichtung gemäß Anspruch 8, die **dadurch gekennzeichnet ist, dass** das Drahtloskommunikationsmodul (14) ferner folgende Merkmale aufweist:
eine Drahtloseinheit (148), die ausgebildet ist, um einen drahtlosen Netzzugang bereitzustellen;
eine WiFi-Einheit (149), die ausgebildet ist, um eine Wireless Fidelity-(WiFi-)LAN-Abdeckung bereitzustellen; und
eine Leistungsversorgungseinheit (146), die ausgebildet ist, um den Anwendungsprozessor (144), die Drahtloseinheit (148) und die WiFi-Einheit (149) zur normalen Arbeit mit Leistung zu versorgen.

10. Ein Verfahren zum Zugreifen auf ein Netz, das **dadurch gekennzeichnet ist, dass** das Verfahren durch die Mobil-Hotspot-Vorrichtung gemäß einem der Ansprüche 1 bis 9 durchgeführt wird, und das Verfahren folgende Schritte aufweist:
Bestimmen, welche der Mehrzahl unterschiedlicher Leistungsschnittstellen (121) die Mobil-Hotspot-Vorrichtung momentan mit Leistung versorgt;
als ein Ergebnis des Bestimmens, dass die Mobil-Hotspot-Vorrichtung über die Ethernet-Schnittstelle versorgt wird, Steuern der Mobil-Hotspot-Vorrichtung durch das Drahtloskommunikationsmodul (14), eine Verbindung zu dem Netz über die Ethernet-Schnittstelle herzustellen, und andernfalls Steuern der Mobil-Hotspot-Vorrichtung durch das Drahtloskommunikationsmodul (14), eine Verbindung zu dem Netz über die zweite Drahtlosschnittstelle herzustellen.

11. Das Verfahren gemäß Anspruch 10, das **dadurch gekennzeichnet ist, dass** das Bestimmen, welche der Mehrzahl unterschiedlicher Leistungsschnittstellen (121) die Mobil-Hotspot-Vorrichtung momentan mit Leistung versorgt, folgende Schritte aufweist:
Überwachen einer Eingangsspannung der Mehrzahl unterschiedlicher Leistungsschnittstellen (121);
Bestimmen, welche der Mehrzahl unterschiedlicher Leistungsschnittstellen (121) die Mobil-Hotspot-Vorrichtung momentan mit Leistung versorgt, gemäß Prioritäten der Mehrzahl unterschiedlicher Leistungsschnittstellen (121).

12. Das Verfahren gemäß Anspruch 10, **dadurch gekennzeichnet, dass** das Verfahren ferner folgende Schritte aufweist:
Bestimmen, ob ein Endgerät vorliegt, das sich um Zugriff bemüht, und ob die Anzahl von Endgeräten, die zugegriffen haben, mehr als 0 beträgt;
wenn ein Endgerät vorliegt, das sich um Zugriff bemüht, und die Anzahl der Endgeräte, die zugegriffen haben, mehr als 0 beträgt, Bestimmen, ob die Anzahl der Endgeräte, die zugegriffen haben, größer ist als eine maximale Anzahl von Endgeräten, denen es durch eine Wireless Fidelity-, WiFi-, Einheit erlaubt ist, gleichzeitig zuzugreifen;
wenn sich gerade kein Endgerät um Zugriff bemüht und kein Endgerät vorliegt, das gerade zugegriffen hat, Eintreten der WiFi-Einheit in einen Standby-Zustand.

13. Das Verfahren gemäß Anspruch 12, das **dadurch gekennzeichnet ist, dass**, nach dem Bestimmen, ob die Anzahl der Endgeräte, die zugegriffen haben, größer ist als die maximale Anzahl der Endgeräte, denen es durch die WiFi-Einheit erlaubt ist, gleichzeitig zuzugreifen, das Verfahren ferner folgenden Schritt aufweist:
wenn die Anzahl der Endgeräte, die zugegriffen haben, nicht größer ist als die maximale Anzahl der Endgeräte, denen es durch die WiFi-Einheit erlaubt ist, gleichzeitig zuzugreifen, Erlauben eines Zugriffs auf das Netz durch das Endgerät.

14. Das Verfahren gemäß Anspruch 12, das **dadurch gekennzeichnet ist, dass**, nachdem die WiFi-Einheit in den Standby-Zustand eingetreten ist, das Verfahren ferner folgenden Schritt aufweist:
periodisches Aufwecken der WiFi-Einheit und Abfragen, ob ein Endgerät vorliegt, das sich um Zugriff bemüht.

## Revendications

1. Dispositif mobile pour zone d'accès sans fil destiné à permettre une communication de données entre un terminal et un réseau, dans lequel le dispositif mobile pour zone d'accès sans fil comprend un module d'interface (12) et un module de communication sans fil (14) qui est couplé au module d'interface (12); le terminal est connecté au module de communication sans fil (14) par l'intermédiaire d'une première interface sans fil et le réseau est connecté au module d'interface (12) par l'intermédiaire d'une interface Ethernet ou au module de communication sans fil (14) par l'intermédiaire d'une deuxième interface sans fil;
le module d'interface (12) comprend une unité de commande d'interface (122) et est par ailleurs configuré pour alimenter une pluralité d'interfaces d'alimentation en énergie différentes (121), où l'une de la pluralité d'interfaces d'alimentation en énergie différentes (121) comprend l'interface Ethernet et une unité d'alimentation en énergie Power Over Ethernet (Alimentation par Ethernet), POE, (125), l'unité de commande d'interface (122) est configurée pour déterminer celle de la pluralité d'interfaces d'alimentation en énergie différentes (121) qui alimente actuellement de l'énergie vers le dispositif mobile pour zone d'accès sans fil et, comme résultat de la détermination que le dispositif mobile pour zone d'accès sans fil est alimenté par l'intermédiaire de l'interface Ethernet, le module de communication sans fil (14) commande le dispositif mobile pour zone d'accès sans fil pour qu'il se connecte au réseau par l'intermédiaire de l'interface Ethernet et, dans le cas contraire, le module de communication sans fil (14) commande le dispositif mobile pour zone d'accès sans fil pour qu'il se connecte au réseau par l'intermédiaire de la deuxième interface sans fil.

2. Dispositif mobile pour zone d'accès sans fil selon la revendication 1, **caractérisé par le fait que** la pluralité d'interfaces d'alimentation en énergie différentes (121) comprend par ailleurs au moins l'un de ce qui suit: interface d'alimentation en Courant Alternatif, CA, 220V, une interface pour connecter une interface d'alimentation en Courant Continu, CC, et une interface de Bus Série Universel, USB.

3. Dispositif mobile pour zone d'accès sans fil selon la revendication 2, **caractérisé par le fait que** le module d'interface (12) comprend par ailleurs au moins l'un de ce qui suit:
une unité de conversion de courant alternatif, CA, - Courant Continu, CC, (123) qui est couplée entre l'interface de courant alternatif 220V et l'unité de commande d'interface (122), et configurée pour convertir un courant alternatif 220 V en un courant continu requis par le module de communication sans fil (14);
une unité de conversion de courant continu - courant continu (124) qui est couplée entre l'interface de connexion de l'interface d'alimentation de courant continu et l'unité de commande d'interface (122) et configurée pour convertir une sortie de courant continu par l'interface pour connecter l'interface d'alimentation de courant continu en courant continu requis par le module de communication sans fil (14);
une unité de conversion de signal de réseau local, LAN, - USB (126) couplée entre l'interface Ethernet et l'unité de commande d'interface (122) et configurée pour utiliser une puce de protocole LAN-USB pour convertir un signal d'interface Ethernet en signal USB; et
une unité d'interface USB (127) qui est couplée entre l'interface USB et l'unité de commande d'interface (122) et configurée pour alimenter vers le module de communication sans fil (14) le courant continu et la communication USB requis.

4. Dispositif mobile pour zone d'accès sans fil selon la revendication 1 ou 3, **caractérisé par le fait que** l'interface Ethernet est une interface de câble RJ-45.

5. Dispositif mobile pour zone d'accès sans fil selon la revendication 1, **caractérisé par le fait que** l'unité de commande d'interface (122) comprend:
une sous-unité de détermination (1222) qui est configurée pour observer une tension d'entrée de la pluralité d'interfaces d'alimentation en énergie différentes (121), et pour déterminer celle parmi la pluralité d'interfaces d'alimentation en énergie différentes (121) qui alimente actuellement le dispositif mobile pour zone d'accès sans fil; et
une sous-unité de commande de commutateur (1224) qui est configurée pour commuter sur l'interface (121) qui alimente actuellement le dispositif mobile pour zone d'accès sans fil.

6. Dispositif mobile pour zone d'accès sans fil selon la revendication 5, **caractérisé par le fait que** la sous-unité de détermination (1222) est par ailleurs configurée pour déterminer, lorsqu'il est observé que de multiples interfaces (121) ont simultanément une tension d'entrée, celle parmi la pluralité d'interfaces d'alimentation en énergie différentes (121) qui alimente actuellement le dispositif mobile pour zone d'accès sans fil selon les priorités de la pluralité d'interfaces d'alimentation en énergie différentes (121).

7. Dispositif mobile pour zone d'accès sans fil selon la revendication 5, **caractérisé par le fait que** l'unité de commande d'interface (122) comprend par ailleurs:
un concentrateur USB (1226) qui est couplé à l'unité de conversion de signal LAN-USB (126) et à l'unité d'interface USB (127), et est configuré pour permettre que l'unité de conversion de signal LAN-USB (126) ou l'unité d'interface USB (127) communique avec le module de communication sans fil (14).

8. Dispositif mobile pour zone d'accès sans fil selon la revendication 5, **caractérisé par le fait que** le module de communication sans fil (14) comprend:
une interface USB (142) qui est configurée pour alimenter un canal de transmission de données pour le module de communication sans fil (14); et
un processeur d'application (144) qui est configuré pour commander le dispositif mobile pour zone d'accès sans fil pour qu'il se connecte au réseau sur base du résultat de la détermination de celle parmi la pluralité d'interfaces d'alimentation en énergie différentes (121) qui alimente actuellement le dispositif mobile pour zone d'accès sans fil, où le dispositif mobile pour zone d'accès sans fil est commandé pour accéder au réseau dans l'un des modes suivants: accès à un LAN par l'intermédiaire d'une interface réseau câblée et accès à un réseau étendu (WAN) en mode sans fil.

9. Dispositif mobile pour zone d'accès sans fil selon la revendication 8, **caractérisé par le fait que** le module de communication sans fil (14) comprend par ailleurs:
une unité sans fil (148) qui est configurée pour permettre un accès à un réseau sans fil;
une unité WiFi (149) qui est configurée pour permettre une couverture LAN à fidélité sans fil (WiFi); et
une unité d'alimentation en énergie (146) qui est configurée pour alimenter en énergie le processeur d'application (144), l'unité sans fil (148) et l'unité WiFi (149) pour un fonctionnement normal.

10. Procédé d'accès à un réseau, **caractérisé par le fait que** le procédé est réalisé par le dispositif mobile pour zone d'accès sans fil selon l'une quelconque des revendications 1 à 9, et le procédé comprend le fait de:
déterminer celle parmi la pluralité d'interfaces d'alimentation en énergie différentes (121) qui alimente actuellement le dispositif mobile pour zone d'accès sans fil;
comme conséquence de la détermination que le dispositif mobile pour zone d'accès sans fil est alimenté par l'intermédiaire de l'interface Ethernet, commander, par le module de communication sans fil (14), le dispositif mobile pour zone d'accès sans fil pour qu'il se connecte au réseau par l'intermédiaire de l'interface Ethernet et, dans le cas contraire, commander, par le module de communication sans fil (14), le dispositif mobile pour zone d'accès sans fil pour qu'il se connecte au réseau par l'intermédiaire de la deuxième interface sans fil.

11. Procédé selon la revendication 10, **caractérisé par le fait que** la détermination de celle parmi la pluralité d'interfaces d'alimentation en énergie différentes (121) qui alimente actuellement le dispositif mobile pour zone d'accès sans fil en énergie comprend le fait de:
observer une tension d'entrée de la pluralité d'interfaces d'alimentation en énergie différentes (121);
déterminer celle parmi la pluralité d'interfaces d'alimentation en énergie différentes (121) qui alimente actuellement le dispositif mobile pour zone d'accès sans fil selon les priorités de la pluralité d'interfaces d'alimentation en énergie différentes (121).

12. Procédé selon la revendication 10, **caractérisé par le fait que** le procédé comprend par ailleurs le fait de:
déterminer s'il y a un terminal qui sollicite un accès et que le nombre de terminaux qui ont accédé est supérieur à 0;
s'il y a un terminal qui sollicite un accès et que le nombre de terminaux qui ont accédé est supérieur à 0, déterminer si le nombre de terminaux qui ont accédé est supérieur au nombre maximal de terminaux qui sont admis par une unité de fidélité sans fil, WiFi, à accéder simultanément;
s'il n'y a pas de terminal qui sollicite un accès et qu'il n'y a pas de terminal qui a accédé actuellement, l'unité WiFi entre en état de veille.

13. Procédé selon la revendication 12, **caractérisé par le fait que**, après avoir déterminé si le nombre de terminaux qui ont accédé est supérieur au nombre maximal de terminaux qui sont admis par l'unité WiFi à accéder simultanément, le procédé comprend par ailleurs le fait de:
si le nombre de terminaux qui ont accédé n'est pas supérieur au nombre maximal de terminaux qui sont admis par l'unité WiFi à accéder simultanément, permettre que le terminal accède au réseau.

14. Procédé selon la revendication 12, **caractérisé par le fait que** l'unité WiFi entre en état de veille, le procédé comprend par ailleurs le fait de:
réveiller périodiquement l'unité WiFi et interroger s'il y a un terminal qui sollicite un accès.
